(19) Europäisches Patentamt / European Patent Office / Office européen des brevets

(11) **EP 2 149 220 B1**

(12) **FASCICULE DE BREVET EUROPEEN**

(45) Date de publication et mention
de la délivrance du brevet:
**29.02.2012 Bulletin 2012/09**

(21) Numéro de dépôt: **08805766.6**

(22) Date de dépôt: **09.05.2008**

(51) Int Cl.:
*H04L 9/32* *(2006.01)*        *H04L 9/08* *(2006.01)*
*H04L 9/14* *(2006.01)*        *G06F 7/38* *(2006.01)*
*G06K 19/073* *(2006.01)*

(86) Numéro de dépôt international:
**PCT/FR2008/050817**

(87) Numéro de publication internationale:
**WO 2008/145936 (04.12.2008 Gazette 2008/49)**

(54) **PROTECTION D'EXECUTION D'UN CALCUL CRYPTOGRAPHIQUE**

VERFAHREN ZUR DURCHFÜHRUNG EINER KRYPTOGRAPHISCHEN BERECHNUNG

METHOD OF EXECUTING A CRYPTOGRAPHIC CALCULATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.05.2007 FR 0703483**

(43) Date de publication de la demande:
**03.02.2010 Bulletin 2010/05**

(73) Titulaire: **MORPHO**
**75015 Paris (FR)**

(72) Inventeurs:
• **CHABANNE, Hervé**
**F-75015 Paris (FR)**
• **BRINGER, Julien**
**F-75015 Paris (FR)**
• **ICART, Thomas**
**F-75015 Paris (FR)**

(74) Mandataire: **Cabinet Plasseraud**
**52, rue de la Victoire**
**75440 Paris Cedex 09 (FR)**

(56) Documents cités:
**WO-A-2005/043805       WO-A-2007/031908**
**WO-A-2007/046018       WO-A-2007/116355**

• **MARCEL WALDVOGEL ET AL: "The VersaKey Framework: Versatile Group Key Management" IEEE JOURNAL ON SELECTED AREAS IN COMMUNICATIONS, IEEE SERVICE CENTER, PISCATAWAY, US, vol. 17, no. 9, septembre 1999 (1999-09), XP011055017 ISSN: 0733-8716**
• **GUAJARDO J ET AL: "FPGA intrinsic PUFs and their use for IP protection" CRYPTOGRAPHIC HARDWARE AND EMBEDDED SYSTEMS - CHES 2007. PROCEEDINGS 9TH INTERNATIONAL WORKSHOP. (LECTURE NOTES IN COMPUTER SCIENCE VOL. 4727) SPRINGER-VERLAG BERLIN, GERMANY, 23 août 2007 (2007-08-23), pages 63-80, XP002461648 ISBN: 3-540-74734-6**

**Description**

La présente invention concerne la gestion de clés cryptographiques dans des composants électroniques, et plus particulièrement dans des composants qui sont construits sur la base d'une technique de type POK, pour 'Physically Obfuscated Keys'.

Les algorithmes cryptographiques permettent de sécuriser la confidentialité de données sur la base de l'utilisation d'une ou plusieurs clés secrètes. Le niveau de sécurité de la confidentialité de ces données dépend alors du niveau de sécurité de la confidentialité de la ou des clés secrètes utilisées lors des opérations cryptographiques mises en oeuvre selon cet algorithme.

Or, lorsqu'une clé cryptographique est stockée sur un composant électronique, il peut être aisé d'en découvrir la valeur de manière frauduleuse, par une méthode invasive sur le composant électronique lui-même. Disposant de la ou des clés cryptographiques stockées, il est alors possible d'accéder aux données que l'on souhaitait pourtant garder confidentielles initialement.

Dans ce contexte, afin d'accroitre le niveau de sécurité attaché aux données cryptées, il convient d'accroître la protection des clés cryptographiques stockées.

On connaît à ce propos, un document 'Physical Random Functions' de Blaise Gassend, Masters Thesis, daté de février 2003 dans lequel sont définies des clés de type 'Physically Obfuscated Keys' en anglais, ou clé de type POK, qui sont obtenues par application de fonctions que l'on ne peut pas cloner à des valeurs d'entrée. Ces fonctions que l'on ne peut pas cloner, d'une part, présentent un caractère déterministe et, d'autre part, sont difficiles à caractériser. En outre, lors d'une intrusion dans le composant électronique, elles possèdent la propriété d'être détruites.

De telles fonctions sont référencées sous le terme PUF, pour 'Physical Unclonable Functions' dans le document précité.

Dans le document WO 2007 046018 une méthode d'authentification de PUF au moyen de données supplémentaires (dénomées helper data en anglais) est décrite.

Une telle fonction PUF fournit toujours la même valeur de résultat pour une même valeur d'entrée. Toutefois, il n'est pas possible de retrouver, à partir de cette valeur de résultat, la valeur d'entrée, et il n'est pas non plus possible de déterminer au préalable la valeur de résultat pour une valeur d'entrée particulière avant d'avoir obtenu une première fois cette valeur de résultat par application de cette fonction PUF.

Une clé de type POK est donc une clé obtenue par l'application d'une fonction que l'on ne peut pas cloner. Dans ce contexte, une clé K de type POK peut être obtenue selon l'équation suivante :

$$K = f(c) \oplus K' \; ;$$

où f est une fonction de type PUF ; et

où c est une valeur déterminée stockée dans le composant électronique, ou en anglais 'challenge' ; et

où K' est une clé qui est stockée dans le composant électronique dans lequel est mise en oeuvre l'obtention de la clé K.

Une clé de type POK est en outre caractérisée par le fait que toute intrusion est destructive. Ainsi, dès qu'une tentative d'intrusion dans le composant électronique considéré est détectée, les moyens d'implémentation de la fonction f de type PUF sont mis hors service dans ledit composant.

Afin d'augmenter le niveau de sécurité de confidentialité attaché à une clé K de type POK, il peut être avantageux d'appliquer l'opération cryptographique basée sur la clé K, sous la forme de deux opérations cryptographiques basées respectivement sur deux clés partielles $K_1$ et $K_2$, ces deux opérations cryptographiques étant effectuées de manière successive.

Chacune de ces opérations considérées individuellement ne révèle rien sur la valeur de la clé secrète K.

Dans ces conditions, une attaque intrusive du composant cryptographique ne peut au mieux que fournir une des deux clés partielles $K_1$ et $K_2$. Ainsi, une telle attaque ne permet pas de récupérer la clé K de type POK dans son ensemble.

Comme l'écrit Blaise Gassend dans le document précité, il n'est pas aisé de mettre en oeuvre l'opération cryptographique basée sur la clé K sous cette forme de deux opérations cryptographiques, notamment lorsque l'on souhaite que les deux clés partielles $K_1$ et $K_2$ soient distinctes pour différents composants cryptographiques utilisant une même clé K.

Dans ce document, il est à cet effet proposé de déterminer deux clés partielles $K_1$ et $K_2$, en manipulant, dans le contexte d'un algorithme de type Rivest-Shamir-Adleman, ou RSA, une clé K de type POK sous la forme d'une composition de deux clés partielles. Toutefois, il n'est pas toujours aisé d'implémenter un algorithme de type RSA sur tous les composants électroniques, notamment lorsque ces derniers présentent des capacités de calcul relativement réduites, puisqu'un algorithme de type RSA est lourd à mettre en oeuvre.

La présente invention vise à permettre une telle mise en oeuvre d'une opération cryptographique dans différents types de composants électroniques.

Un premier aspect de la présente invention propose un procédé d'exécution d'un calcul cryptographique dans un composant électronique, selon un algorithme cryptographique déterminé incluant au moins une application d'une fonction à sens unique qui est mise hors service sur une intrusion dans le composant électronique ;

ladite fonction à sens unique étant basée sur une première opération affine qui correspond à une première clé secrète ;

ledit procédé comprenant les étapes suivantes relatives à l'application de ladite fonction à sens unique :

/a/ obtenir des première et seconde valeurs aléatoires (r, r') ;

/b/ obtenir un premier résultat par application d'une deuxième opération affine ($\sigma_{K1}$), qui correspond à une deuxième clé secrète, sur une première combinaison des première et seconde valeurs aléatoires ;

/c/ obtenir un second résultat par application d'une troisième opération affine ($\sigma_{K2}$) sur ledit premier résultat ;

dans lequel la composition des troisième et deuxième opérations affines ($\sigma_{K2}$ o $\sigma_{K1}$) correspond à la première application affine ($\sigma_K$) ; et

dans lequel une opération cryptographique est appliquée à l'un au moins parmi ledit second résultat et une seconde combinaison des première et seconde valeurs aléatoires.

Dans un mode de réalisation de la présente invention, la fonction à sens unique est mise hors service car elle est exécutée à l'aide d'un POK.

La seconde combinaison peut être identique ou différente de la première combinaison.

En procédant ainsi, on fait correspondre à la première clé secrète une première opération affine, qui peut être une opération linéaire. Puis, on applique cette première opération affine sous la forme de deux opérations affines successives, et on met ensuite en oeuvre une opération cryptographique, soit sur le résultat obtenu précédemment, soit sur une autre combinaison des deux valeurs aléatoires.

L'application d'une opération cryptographique dans l'un ou l'autre des cas énoncés ci-dessus permet d'obtenir un résultat global crypté. En effet, dans un cas, le résultat global crypté correspond au second résultat crypté. Dans un autre cas, le résultat global crypté se présente en deux parties, la première partie étant le second résultat obtenu et la seconde partie correspondant à une combinaison des deux valeurs aléatoires cryptée.

On entend ici par le terme 'combinaison', toute application qui permet de combiner deux valeurs, telle que par exemple la mise bout à bout des deux valeurs considérées, ou encore l'opération de 'ou exclusif', ou bien l'une des deux valeurs.

Ci-après, les combinaisons des valeurs utilisées sont référencées comb$_i$, i est un indice entier. On peut prévoir d'utiliser des combinaisons identiques, similaires ou différentes.

Grâce à ces dispositions, il est possible de protéger la confidentialité de la clé secrète utilisée pour crypter des données en scindant l'application de la fonction à sens unique, qui est basée sur cette clé secrète, en l'application de deux sous-opérations successives secrètes.

Pour découvrir la clé secrète, il faut alors récupérer les deux sous-opérations secrètes.

En effet, dans un environnement de type POK, dans lequel les moyens mis en oeuvre pour l'application de la fonction à sens unique sont détruits, ou encore mis hors service, sur une intrusion dans le composant électronique considéré, le composant électronique peut être ouvert de telle sorte que la deuxième opération affine soit découverte. Mais dans ce cas là, la troisième opération affine ne peut plus alors être découverte.

Dans un autre scénario, on peut envisager que le composant électronique soit ouvert de telle sorte que la troisième affine opération soit découverte. Mais, dans ce cas, c'est la deuxième opération affine qu'il sera impossible de déterminer.

Ainsi, il n'est pas possible dans ces conditions de découvrir la première opération secrète sur la base matérielle du composant électronique.

Il convient de noter qu'en considérant la clé secrète selon une première opération affine, il est aisé de déterminer une pluralité de couples de deuxième et troisième opérations affines qui, appliquées successivement, permettent de mettre en oeuvre la première application affine en deux étapes successives. Ainsi, il est facile de crypter des données sur la base d'une clé secrète de type POK, en prévoyant la mise en oeuvre du cryptage de données en deux étapes successives, de telle sorte que cette mise en oeuvre soit possible sur tout type de composants électroniques, y compris ceux qui ne présentent pas d'importantes capacités de calcul.

On peut prévoir que l'opération cryptographique correspond à une fonction de hachage ou encore une fonction pseudo-aléatoire. Par exemple, de manière avantageuse, cette fonction peut être mise en oeuvre grâce à une fonction de chiffrement symétrique telle que l'AES, pour 'Advanced Encryption Standard' en anglais.

Dans un mode de réalisation de la présente invention, lorsque cette opération cryptographique est appliquée au second résultat, les première, deuxième et troisième opérations affines peuvent correspondre à des permutations linéaires au niveau bit.

Dans ce cas, la combinaison des première et seconde valeurs aléatoires peut correspondre à l'application d'une opération cryptographique prenant en entrée ces première et seconde valeurs aléatoires.

Cette dernière opération cryptographique peut, elle aussi, correspondre à une fonction de hachage.

Dans un mode de réalisation, la combinaison des première et seconde valeurs aléatoires correspond à l'application d'une opération 'ou exclusif' entre les première et seconde valeurs aléatoires.

Dans une variante, lorsque l'opération cryptographique est appliquée à une seconde combinaison des première et seconde valeurs aléatoires, les première, deuxième et troisième opérations affines peuvent correspondre à des opérations de 'ou exclusif' avec les première, deuxième et troisième clés secrètes respectivement, la première clé secrète étant alors égale au résultat d'une opération de 'ou exclusif' entre la deuxième et la troisième clé secrète.

Un tel procédé d'exécution d'un calcul cryptographique peut avantageusement être mis en oeuvre dans le contexte d'un procédé d'identification d'une étiquette radio. Il permet ainsi de protéger efficacement la confidentialité de la clé secrète qui a été attribuée à l'étiquette radio considérée.

Un deuxième aspect de la présente invention propose donc un procédé d'identification d'une étiquette radio auprès d'un serveur d'identification,

le serveur d'identification gérant une pluralité de clés secrètes selon un arbre Q-aire présentant une racine et une pluralité de feuilles, où Q est un nombre entier supérieur ou égal à 2, chaque feuille de l'arbre correspondant à une clé secrète ; une clé secrète de ladite pluralité de clés secrètes étant associée à ladite étiquette radio ;

ledit procédé d'identification comprenant les étapes suivantes au niveau de ladite étiquette radio :

/1/ recevoir une première valeur aléatoire depuis le serveur d'identification ;

/2/ générer une seconde valeur aléatoire ;

/3/ obtenir un résultat par application d'un calcul cryptographique aux première et seconde valeurs aléatoires sur la base d'au moins une partie de ladite clé secrète associée à ladite étiquette radio ; et /4/ transmettre ledit résultat au serveur d'identification ;

dans lequel ledit calcul cryptographique est mis en oeuvre suivant un procédé d'exécution d'un calcul cryptographique selon le premier aspect de la présente invention.

Lorsque la clé secrète est représentée sous la forme de plusieurs parties représentant respectivement des portions d'un chemin depuis la racine de l'arbre jusqu'à la feuille correspondante, les étapes précédentes /1/ à /4/ peuvent être répétées pour chacune desdites parties de la clé secrète.

On peut également prévoir de ne répéter que les étapes /3/ et /4/, en évitant ainsi d'avoir à générer à nouveau les valeurs aléatoires pour chaque portion de la clé secrète, et les transmettre le cas échéant.

De manière avantageuse, chaque portion de la deuxième clé secrète peut être déterminée par un POK selon l'équation suivante :

$$K = f(c) \; ;$$

où f est une fonction de type PUF ; et

où c est une valeur déterminée stockée dans le composant électronique, ou en anglais 'challenge'.

On peut ainsi économiser la place mémoire utilisée pour le stockage de K', tel que défini ci-dessus.

Comme cela est énoncé ci-dessus relativement au procédé d'exécution de calcul cryptographique, dans une variante, on peut donc ici prévoir d'obtenir un troisième résultat par application de l'opération cryptographique au second résultat. Dans ce contexte, à l'étape /4/ du procédé d'identification, on transmet le troisième résultat, ainsi que la seconde valeur aléatoire générée par l'étiquette radio, au serveur d'identification.

Ensuite, le serveur d'identification disposant ainsi des première et seconde valeurs aléatoires et du second résultat crypté, il est alors en mesure de déterminer quelle clé secrète est associée à l'étiquette radio correspondante et, de ce fait, d'identifier cette étiquette radio. Cette détermination est basée sur un calcul, qui est similaire à celui effectué au niveau de l'étiquette radio, mais qui est appliqué à toutes les clés secrètes gérées de son côté. On peut noter qu'il n'est pas requis de mettre en oeuvre ces calculs similaires entre l'étiquette radio et le serveur d'identification de la même manière. En effet, le serveur d'identification peut exécuter l'opération basée sur la clé secrète sans la scinder en deux.

Puis, il peut alors être décidé si l'étiquette radio est identifiée sur la base d'une comparaison entre les résultats obtenus à l'issue de ces calculs avec le résultat reçu depuis l'étiquette radio.

Dans une autre variante, l'opération cryptographique est appliquée à une seconde combinaison des première et seconde valeurs aléatoires. Dans ce cas, à l'étape /4/, le second résultat et le résultat de l'opération cryptographique sur la seconde combinaison des valeurs aléatoires sont transmis au serveur d'identification.

Le serveur d'identification, dans cette variante également, est en mesure d'identifier l'étiquette radio sur la base d'une comparaison des résultats obtenus par des calculs similaires à celui effectué par l'étiquette radio sur toutes les clés secrètes qu'il gère avec les informations reçues depuis l'étiquette, qui sont le second résultat et le résultat de l'opération cryptographique sur une combinaison de r et r'.

Un troisième aspect de la présente invention propose un composant électronique adapté pour exécuter un calcul cryptographique selon un algorithme cryptographique déterminé incluant au moins une application d'une fonction à sens unique qui est mise hors service sur une intrusion dans le composant électronique ;

ladite fonction à sens unique étant basée sur une clé secrète (K) qui correspond à une première opération affine ($\sigma_K$) ; ledit composant électronique comprenant des moyens agencés pour mettre en oeuvre un procédé selon le premier aspect de la présente invention.

Un quatrième aspect de la présente invention propose une étiquette radio comprenant un composant électronique selon le troisième aspect de la présente invention, ladite étiquette étant adaptée pour mettre en oeuvre un procédé d'identification selon le deuxième aspect de la présente invention.

Un cinquième aspect de la présente invention propose un système d'identification d'étiquette radio comprenant un serveur d'identification et une étiquette selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes d'un procédé d'exécution d'un calcul cryptographique selon un mode de réalisation de la présente invention ;
- la figure 2 illustre une gestion de clés secrètes en fonction d'un arbre binaire selon un mode de réalisation de la présente invention ;
- la figure 3 illustre les principales étapes d'un procédé d'identification d'une étiquette radio selon un mode de réalisation de la présente invention ; et
- la figure 4 illustre les principales étapes d'un procédé d'identification d'une étiquette radio selon un autre mode de réalisation de la présente invention.

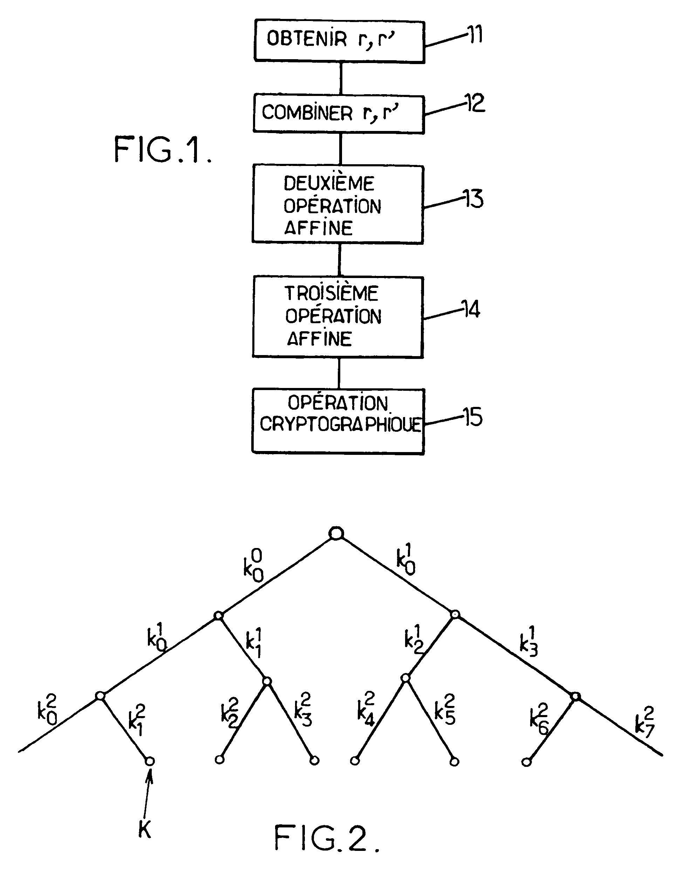

La figure 1 illustre les principales étapes réalisées selon un mode de réalisation de la présente invention dans un composant électronique.

A une étape 11, des première et seconde valeurs aléatoires r et r' sont obtenues. Aucune limitation n'est attachée à la présente invention au regard de cette étape. Il est ici notamment possible de prévoir que le composant électronique est adapté pour générer une des deux valeurs aléatoires et que l'autre valeur aléatoire est reçue depuis l'extérieur de ce composant électronique.

A une étape 12, on combine ces première et seconde valeurs aléatoires, selon une combinaison $comb_i$.

On peut, dans une variante, prévoir d'appliquer en outre une opération cryptographique à une telle combinaison de ces deux valeurs aléatoires r et r'. Toutefois, cette étape reste optionnelle, le procédé selon un mode de réalisation de la présente invention pouvant être mis en oeuvre sur une combinaison quelconque de ces valeurs r et r', telle qu'une opération de 'ou exclusif', sans appliquer une opération cryptographique. Mais, afin d'augmenter encore le niveau de sécurité de la confidentialité de la clé, il peut être avantageux d'appliquer à cette étape une opération cryptographique, telle que par exemple une fonction de hachage.

La fonction à sens unique à appliquer au cours du procédé d'exécution d'un calcul cryptographique selon un mode de réalisation de la présente invention, est basée sur une clé secrète K. On considère qu'à cette clé secrète K correspond une fonction affine, qui peut être par exemple une première permutation $\sigma_K$ au niveau bit de la valeur d'entrée. En décomposant cette première application affine $\sigma_K$ en une composition d'au moins une deuxième et une troisième application affine, respectivement $\sigma_{K1}$ et $\sigma_{K2}$, on est en mesure d'augmenter le niveau de protection de la confidentialité de cette première application affine et, de ce fait, de la clé secrète K qui lui correspond. En effet, dans ce contexte, la mise en oeuvre de la fonction à sens unique est mise hors service dès la première intrusion dans le composant électronique considéré.

Ainsi, à une étape 13, la deuxième opération affine $\sigma_{K1}$ est appliquée au résultat obtenu à l'issue de l'étape 12 précédente. Puis, à une étape 14, la troisième opération affine $\sigma_{K2}$ est appliquée au résultat obtenu à l'étape 13.

Enfin, à une étape 15, une opération cryptographique, qui peut par exemple correspondre à une fonction de hachage, est ensuite appliquée au résultat obtenu à l'étape 14.

A l'issue de l'étape 15, on obtient un résultat crypté par application d'un procédé qui inclut l'application d'une fonction à sens unique prenant en compte une clé secrète K, sans mettre en péril la confidentialité de la valeur de la clé secrète au moment de l'exécution de ce procédé.

Dans une variante, l'opération cryptographique mise en oeuvre à l'étape 15, est appliquée à une combinaison des deux valeurs aléatoires r et r', cette combinaison pouvant être différente de celle qui est mise en oeuvre à l'étape 12. Dans ce cas, le résultat crypté par application du calcul cryptographique considéré ici, correspond, d'une part, au second résultat, c'est-à-dire celui obtenu à l'issus de l'étape 14 résultant de la composition des deuxième et troisième opérations affines et, d'autre part, à une combinaison cryptée des deux valeurs aléatoires.

Ici, les première, deuxième et troisième opérations affines, respectivement $\sigma_K$, $\sigma_{K1}$ et $\sigma_{K2}$ peuvent vérifier les équations suivantes :

$$\sigma_K(x) = x \oplus K$$

$$\sigma_{K1}(x) = x \oplus K_1$$

$$\sigma_{K2}(x) = x \oplus K_2$$

où x est une valeur d'entrée;

où K, K1 et K2 sont les première, deuxième et troisième clés secrètes respectivement, qui vérifie l'équation suivante :

$$K = K_1 \oplus K_2$$

Pour crypter une combinaison de r et r', on peut prévoir d'appliquer une fonction de hachage ou encore une fonction pseudo-aléatoire.

Il peut être avantageux de mettre en oeuvre un tel procédé d'exécution d'un calcul cryptographique selon un mode de réalisation de la présente invention dans le contexte d'une identification d'une étiquette radio, telle que celle qui utilise par exemple un protocole d'identification du type de celui décrit dans le document 'A scalable, delegatable pseudonym protocol enabling ownership transfer of RFID tags' de David Molnar, Andrea Soppera, et David Wagner, daté de 2005.

On entend par 'RFID tag', une étiquette radio utilisant la technologie référencée par les termes 'Radio Frequency Identification' en anglais. Ces dernières comprennent une antenne associée à une puce électronique de telle sorte qu'elles sont adaptées pour recevoir et émettre des messages. Dans un tel contexte, des données d'identification sont stockées sur les étiquettes radio.

Dans le contexte du document précité, un centre d'indentification, ou 'Trusted Center', ou encore 'serveur d'identification', est en charge d'identifier une étiquette radio sur la base de la clé secrète qui lui est associée. A cet effet, il gère une pluralité de clés secrètes sous la forme d'un arbre Q-aire, où Q est un entier supérieur ou égal à 2, chaque feuille de l'arbre correspondant à une clé secrète. Les clés secrètes sont représentées sous la forme de portions de chemin depuis la racine de l'arbre jusqu'à la feuille qui correspond à la clé secrète que l'on souhaite représenter. Plus précisément, par exemple, dans le cas d'un arbre binaire, chaque portion de chemin représentant une clé précise le parcours de l'arbre en indiquant à chaque noeud laquelle des deux branches doit être prise pour atteindre la feuille recherchée.

La figure 2 représente une gestion de clés secrètes selon un tel arbre, qui est ici binaire. Ainsi, dans un tel système d'identification, la clé secrète utilisée pour l'identification d'une étiquette radio est représentée sous la forme d'un chemin dans l'arbre binaire.

Par exemple, la représentation, et donc le stockage et la manipulation, d'une clé K correspondant à la feuille de l'arbre indiquée par une flèche sur la figure 2, correspond à $k_0^0 k_0^1 k_1^2$ .

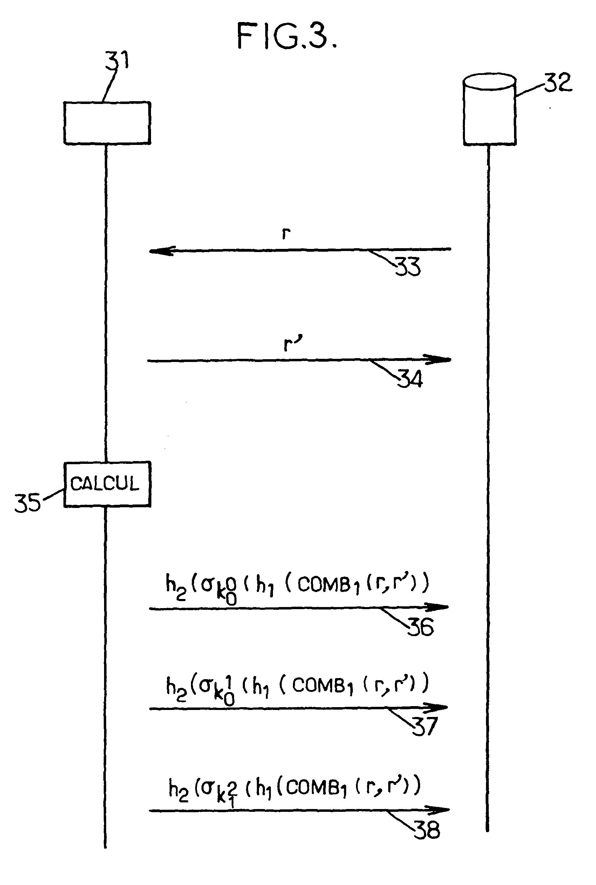

La figure 3 illustre les principales étapes d'un procédé d'identification d'une étiquette radio dans un système d'identification selon un mode de réalisation de la présente invention.

Un tel système d'identification comprend une étiquette radio 31 et serveur d'identification 32 gérant des clés secrètes selon un arbre binaire tel qu'illustré à la figure 2.

L'étiquette radio 31 reçoit en premier lieu depuis le serveur d'identification 32 une première valeur aléatoire r, puis elle génère une seconde valeur aléatoire r'.

Elle applique ensuite un calcul cryptographique aux première et seconde valeurs aléatoires sur la base de la représentation de sa clé secrète sous la forme du chemin de parcours de l'arbre, et transmet le résultat de l'exécution de ce calcul cryptographique au serveur d'identification. Ce dernier applique alors ce calcul cryptographique aux représentations respectives des différentes clés secrètes qui correspondent aux feuilles de l'arbre qu'il gère. Ainsi, sur la base d'une comparaison entre le résultat reçu et les résultats obtenus sur les feuilles de l'arbre, il est alors en mesure de déterminer quelle clé secrète est associée à cette étiquette radio, et de ce fait, il peut identifier cette dernière.

Or, dans ce contexte, il est courant que les clés secrètes soient distribuées aux différentes étiquettes radio en fonction d'un classement par type d'utilisation de ces étiquettes radio. Ainsi, par exemple, si ces étiquettes radio étaient utilisées dans des billets bancaires, les clés secrètes allouées aux billets d'une même somme pourraient correspondre à des clés secrètes qui ont en commun la valeur d'une grande partie des bits.

Dans ce cas, lorsqu'un attaquant récupère les valeurs soit qui ont transité sur l'interface entre le centre d'identification et l'étiquette radio d'un billet bancaire de 500 euros par exemple, soit via un lecteur d'étiquette radio adapté, et qu'il récupère également la représentation telle décrite ci-avant pour la clé secrète de ce billet bancaire de 500 euros, il peut alors détenir assez d'informations pour localiser des billets de banque de cette valeur sur la simple base des informations qui transitent entre le centre d'identification et l'étiquette radio de ces billets. En effet, suivant le classement appliqué dans l'arbre des clés secrètes, détenir des informations sur la localisation d'une clé secrète peut fournir des informations secrètes très utiles sur d'autres feuilles qui dépendent d'un même noeud supérieur.

Dans le contexte d'une gestion de clés secrètes via un arbre Q-aire, l'attaque possible qui est évoquée ci-dessus n'est qu'un exemple parmi de nombreux autres dans lesquels, à partir de la valeur de la clé secrète d'une étiquette radio, on peut avoir accès à des informations confidentielles sur d'autres étiquettes radio.

Afin d'augmenter le niveau de sécurité attaché à la confidentialité de la clé secrète stockée physiquement sur l'étiquette radio, il peut être avantageux de se prémunir de toute attaque intrusive en utilisant les propriétés caractéristiques d'un stockage et d'une gestion de clé secrète telles qu'énoncées ci-avant relativement aux clés de type POK.

Ainsi, il est ici prévu de mettre en oeuvre un procédé d'exécution de calcul cryptographique selon un mode de réalisation de la présente invention, au niveau de l'étiquette radio.

Une telle étiquette radio dispose d'une valeur aléatoire r reçue depuis le serveur d'identification et génère une autre valeur aléatoire r'. Elle peut alors exécuter, à une étape 35, les étapes 11 à 15 du procédé selon un mode de réalisation de la présente invention.

Dans la variante décrite ici, l'opération cryptographique de l'étape 15 est appliquée au résultat obtenu à l'étape 14.

Les portions de chemin de la clé secrète K, qui correspond par exemple à $k_0^0 k_0^1 k_1^2$, sont traitées selon le procédé considéré, les uns après les autres.

Dans l'exemple décrit, le procédé comprend une combinaison des deux valeurs aléatoires r et r'. Puis, on prévoit d'appliquer une opération cryptographique $h_1$ sur cette combinaison, et ensuite l'opération linéaire de permutation de bits $\sigma_K$. Enfin, une opération cryptographique $h_2$ est appliquée au résultat de la permutation de bits.

Le résultat d'un tel calcul peut s'écrire :

$$h_2\left(\sigma_K\left(h_1\left(comb_1(r,r')\right)\right)\right)$$

où $comb_1(r, r')$ est une combinaison des valeurs aléatoires de r et r'.

Le procédé est appliqué à la portion $k_0^0$ et le résultat obtenu, correspondant à $h_2$ $h_2\left(\sigma_{k_0^0}\left(h_1\left(comb_1(r,r')\right)\right)\right)$, est transmis par un message 36 au serveur d'identification 32. Puis, il est appliqué à la portion $k_0^1$, et le résultat alors obtenu, correspondant à $h_2\left(\sigma_{k_0^1}\left(h_1\left(comb_1(r,r')\right)\right)\right)$, est transmis au serveur d'identification 32 via un message 37. Enfin, ce procédé est appliqué à la portion $k_1^2$, et le résultat obtenu, correspondant à $h_2\left(\sigma_{k_1^2}\left(h_1\left(comb_1(r,r')\right)\right)\right)$, est transmis au serveur d'identification par un message 38.

Les valeurs aléatoires r et r' peuvent soit être conservée pour l'ensemble des étapes concernant toutes les parties de la clé secrète $k_0^0$, $k_0^1$, $k_1^2$, soit être générée à nouveau à chaque partie de la clé secrète.

Puis, le serveur dispose de deux valeurs aléatoires r et r', comme l'étiquette radio. Il applique des calculs similaires à ceux exécutés par l'étiquette radio relativement aux différentes clés secrètes de l'arbre jusqu'à ce qu'il puisse identifier cette étiquette radio par comparaison avec la valeur cryptée reçue depuis cette dernière.

Il convient de noter ici que le serveur d'identification peut, lui, exécuter de tels calculs sans appliquer une scission de l'exécution de l'opération affine en deux étapes. De ce fait, un procédé d'identification radio selon un mode de réalisation de la présente invention reste compatible avec les serveurs d'identification existant.

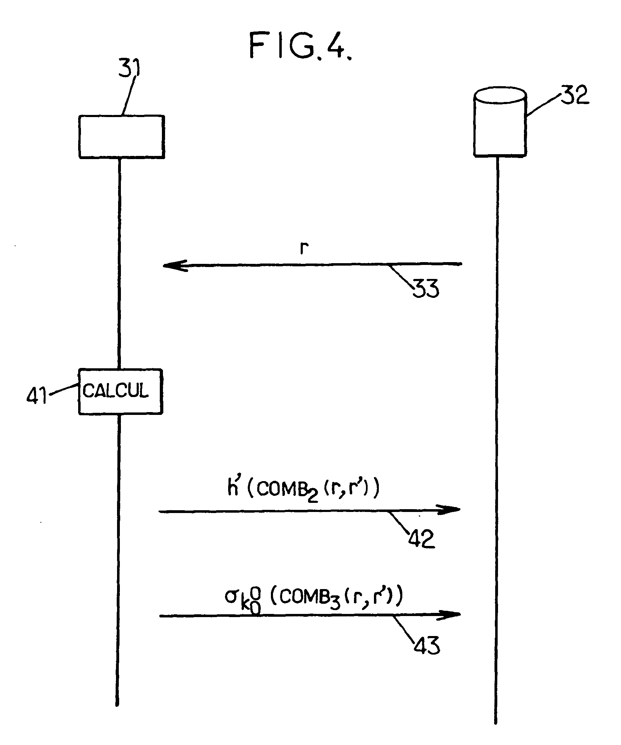

La figure 4 illustre les principales étapes d'un procédé d'identification d'une étiquette radio selon un autre mode de réalisation de la présente invention. Dans cet exemple d'application, l'opération cryptographique mise en oeuvre à l'étape 15 est appliquée sur une combinaison des deux valeurs aléatoires r et r'. Dans ce cas, la combinaison des deux valeurs aléatoires peut correspondre avantageusement à la valeur aléatoire r'.

Ainsi, dans ce contexte, l'étiquette radio 31 ne transmet pas, comme dans le mode de réalisation précédent, la seconde valeur aléatoire au serveur d'identification 32, mais c'est uniquement une image cryptée de cette seconde valeur aléatoire qui est transmise.

A l'issue du calcul cryptographique selon un procédé d'exécution tel que décrit ci-avant, c'est-à-dire à l'issue d'une étape 41, l'étiquette est en mesure de transmettre au serveur d'identification 32 un message 42 indiquant une combinaison de r et r' cryptée, $h'(comb_2(r,r'))$, où h' est une fonction de cryptage qui peut être une fonction de hachage ou encore une fonction pseudo-aléatoire, par exemple, et où $comb_2$ est une combinaison des valeurs r et r'.

Les sections suivantes décrivent les étapes d'un tel procédé d'identification appliqué seulement à la première portion de la clé secrète, les autres étapes relatives aux autres portions pouvant aisément se déduire.

Il transmet, via le message 43, le résultat de l'application de la fonction affine $\sigma k_0^0$ à une combinaison de r et r'.

Ici, le résultat de l'application de cette fonction affine peut correspondre à l'opération de 'ou exclusif' entre la portion de clé $k_0^0$, et la combinaison de r et r', l'équation suivante étant vérifiée :

$$\sigma k_0^0 = k_0^0 \oplus comb_3 (r, r')$$

où $comb_3$ est une combinaison de r et r'.

Les valeurs aléatoires r et r' peuvent soit être conservée pour l'ensemble des étapes concernant toutes les parties de la clé secrète $k_0^0$, $k_0^1$, $k_1^2$, soit être générée à nouveau à chaque partie de la clé secrète.

Dans cet exemple, pour l'identification d'une étiquette radio, le serveur d'identification 32 dispose de la première valeur aléatoire, d'un résultat crypté d'une combinaison des deux valeurs aléatoires, et des opérations affines à appliquer en fonction des clés gérées.

A partir des clés secrètes gérées au niveau du serveur d'identification 32, de la combinaison des valeurs aléatoires r et r' cryptée reçue dans le message 42 et du contenu du message 43, ainsi que de la valeur de r, il est alors en mesure de vérifier s'il obtient la même combinaison de r et r' cryptée pour identifier la clé secrète utilisée. Il convient de noter ici que seule une image cryptée de r' est reçue au niveau du serveur d'identification.

Afin de déterminer la valeur de la première partie de la clé secrète, il peut appliquer les équations suivantes, pour la première partie de la clé secrète :

$$comb_3 (r, r'_1) = k_0^0 \oplus ( k_0^0 \oplus comb_3 (r, r')) ;$$

et

$$comb_3 (r, r'_2) = k_0^1 \oplus ( k_0^0 \oplus comb_3 (r, r')) ;$$

où $( k_0^0 \oplus comb_3 (r, r'))$ correspond au contenu du message 42 reçu ; et
où $comb_3(r, r'_1)$ et $comb_3(r, r'_2)$ sont des candidats potentiels de la combinaison des deux valeurs aléatoires r et r'.

Puis, il applique la même opération cryptographique h que celle qui a été appliquée à l'étiquette radio sur la combinaison de r et $r'_1$ et sur la combinaison de r et $r'_2$. Il compare ensuite les deux valeurs obtenues à l'issue de ces calculs relatifs à l'opération cryptographique et détermine alors la valeur de la valeur de la première partie de la clé secrète.

Il détermine la clé secrète dans son ensemble en procédant de même pour toutes les portions de la clé secrète.

**Revendications**

1. Procédé d'exécution d'un calcul cryptographique dans un composant électronique, selon un algorithme cryptographique déterminé incluant au moins une application d'une fonction à sens unique qui est mise hors service sur une intrusion dans le composant électronique ;
ladite fonction à sens unique étant basée sur une première opération affine ($\sigma_K$) qui correspond à une première clé secrète (K) ;
ledit procédé comprenant les étapes suivantes relatives à l'application de ladite fonction à sens unique :

/a/ obtenir des première et seconde valeurs aléatoires (r, r') ;

/b/ obtenir un premier résultat par application d'une deuxième opération affine ($\sigma_{K1}$), qui correspond à une deuxième clé secrète, sur une première combinaison des première et seconde valeurs aléatoires ;

/c/ obtenir un second résultat par application d'une troisième opération affine ($\sigma_{K2}$), qui correspond à une troisième clé secrète, sur ledit premier résultat ;

dans lequel la composition des troisième et deuxième opérations affines ($\sigma_{K2}$ o $\sigma_{K1}$) correspond à la première opération affine ($\sigma_K$) ; et

dans lequel une opération cryptographique est appliquée à l'un au moins parmi ledit second résultat et une seconde combinaison des première et seconde valeurs aléatoires.

2. Procédé d'exécution d'un calcul cryptographique selon la revendication 1, dans lequel l'opération cryptographique correspond à l'une parmi une fonction de hachage et une fonction pseudo-aléatoire.

3. Procédé d'exécution d'un calcul cryptographique selon la revendication 1 ou 2, dans lequel l'opération cryptographique est appliquée au second résultat et dans lequel les première, deuxième et troisième opérations affines correspondent à des permutations au niveau bit.

4. Procédé d'exécution d'un calcul cryptographique selon la revendication 3, dans lequel la première combinaison des première et seconde valeurs aléatoires correspond à l'application d'une opération cryptographique prenant en entrée les première et seconde valeurs aléatoires.

5. Procédé d'exécution d'un calcul cryptographique selon la revendication 4, dans lequel l'opération cryptographique correspond à une fonction de hachage.

6. Procédé d'exécution d'un calcul cryptographique selon l'une quelconque des revendications 1 à 3, dans lequel la première combinaison des première et seconde valeurs aléatoires correspond à l'application d'une opération 'ou exclusif' entre les première et seconde valeurs aléatoires.

7. Procédé d'exécution d'un calcul cryptographique selon la revendication 1, dans lequel dans lequel l'opération cryptographique est appliquée à une seconde combinaison des première et seconde valeurs aléatoires ;

dans lequel les première, deuxième et troisième opérations affines ($\sigma_K$, $\sigma_{K1}$, $\sigma_{K2}$) correspondent à des opérations de 'ou exclusif' avec les première, deuxième et troisième clés secrètes respectivement ; et

dans lequel la première clé secrète (K) est égale au résultat d'une opération de 'ou exclusif' entre la deuxième et la troisième clé secrète ($K_1$, $K_2$).

8. Procédé d'identification d'une étiquette radio auprès d'un serveur d'identification,

le serveur d'identification gérant une pluralité de clés secrètes selon un arbre Q-aire présentant une racine et une pluralité de feuilles, où Q est un nombre entier supérieur ou égal à 2, chaque feuille de l'arbre correspondant à une clé secrète ;

une clé secrète de ladite pluralité de clés secrètes étant associée à ladite étiquette radio ;

ledit procédé d'identification comprenant les étapes suivantes au niveau de ladite étiquette radio :

/1/ recevoir une première valeur aléatoire (r) depuis le serveur d'identification ;

/2/ générer une seconde valeur aléatoire (r') ;

/3/ obtenir un résultat par application d'un calcul cryptographique aux première et seconde valeurs aléatoires sur la base d'au moins une partie de ladite clé secrète associée à ladite étiquette radio ; et

/4/ transmettre ledit résultat au serveur d'identification ;

dans lequel ledit calcul cryptographique est mis en oeuvre suivant un procédé d'exécution d'un calcul cryptographique selon l'une quelconque des revendications précédentes.

9. Procédé d'identification d'une étiquette radio selon la revendication 8, dans lequel on obtient troisième résultat par application de l'opération cryptographique au second résultat ; et

dans lequel, à l'étape /4/, le troisième résultat et la seconde valeur aléatoire sont transmis au serveur d'identification.

10. Procédé d'identification d'une étiquette radio selon la revendication 8, dans lequel on obtient un quatrième résultat par application de l'opération cryptographique à une seconde combinaison des première et seconde valeurs aléatoires ; et

dans lequel, à l'étape /4/, le second résultat et le quatrième résultat sont transmis au serveur d'identification.

11. Procédé d'identification d'une étiquette radio selon l'une quelconque des revendications 8 à 10, dans lequel la clé secrète est représentée sous la forme de plusieurs parties représentant respectivement des portions d'un chemin depuis la racine de l'arbre jusqu'à la feuille correspondante, et

dans lequel les étapes /1/ à /4/ sont répétées pour chacune desdites parties de la clé secrète.

12. Composant électronique adapté pour exécuter un calcul cryptographique selon un algorithme cryptographique déterminé incluant au moins une application d'une fonction à sens unique qui est mise hors service sur une intrusion dans le composant électronique ;

ladite fonction à sens unique étant basée sur une clé secrète (K) qui correspond à une première opération affine ($\sigma_K$) ;

ledit composant électronique comprenant des moyens agencés pour mettre en oeuvre un procédé selon l'une quelconque des revendications 1 à 7.

13. Etiquette radio comprenant un composant électronique selon la revendication 9, ladite étiquette étant adaptée pour mettre en oeuvre un procédé d'identification selon l'une quelconque des revendications 8 à 11.

14. Système d'identification d'étiquette radio comprenant un serveur d'identification et une étiquette selon la revendication 13.

**Claims**

1. Method of executing a cryptographic calculation in an electronic component, according to a given cryptographic algorithm including at least one application of a one-way function which is disabled upon an intrusion into the electronic component;

said one-way function being based on a first affine operation ($\sigma_K$) which corresponds to a first secret key (K);

said method comprising the following steps relating to the application of said one-way function:

/a/ obtaining first and second random values (r, r');

/b/ obtaining a first result by applying a second affine operation ($\sigma_{K1}$), which corresponds to a second secret key, to a first combination of the first and second random values;

/c/ obtaining a second result by applying a third affine operation ($\sigma_{K2}$), which corresponds to a third secret key, to said first result;

in which the combination of the third and second affine operations ($\sigma_{K2} \circ \sigma_{K1}$) corresponds to the first affine operation ($\sigma_K$); and

in which a cryptographic operation is applied to one at least among said second result and a second combination of the first and second random values.

2. Method of executing a cryptographic calculation according to claim 1, in which the cryptographic operation corresponds to one among a hash function and a pseudo-random function.

3. Method of executing a cryptographic calculation according to claim 1 or 2, in which the cryptographic operation is applied to the second result, and in which the first, second and third affine operations correspond to bit-level permutations.

4. Method of executing a cryptographic calculation according to claim 3, in which the first combination of the first and second random values corresponds to the application of a cryptographic operation taking as input the first and second random values.

5. Method of executing a cryptographic calculation according to claim 4, in which the cryptographic operation corresponds to a hash function.

6. Method of executing a cryptographic calculation according to any one of claims 1 to 3, in which the first combination of the first and second random values corresponds to the application of an "exclusive or" operation between the first and second random values.

**7.** Method of executing a cryptographic calculation according to claim 1, in which the cryptographic operation is applied to a second combination of the first and second random values;
in which the first, second and third affine operations ($\sigma_K$, $\sigma_{K1}$, $\sigma_{K2}$) correspond to "exclusive or" operations with the first, second and third secret keys respectively; and
in which the first secret key (K) is equal to the result of an "exclusive or" operation between the second and the third secret key ($K_1$, $K_2$).

**8.** Method of identifying a radio tag at an identification server,
the identification server managing a plurality of secret keys according to a Q-ary tree having a root and a plurality of leaves, where Q is an integer greater than or equal to 2, each leaf of the tree corresponding to one secret key;
one secret key of said plurality of secret keys being associated with said radio tag;
said identification method comprising the following steps on said radio tag:

/1/ receiving a first random value (r) from the identification server;
/2/ generating a second random value (r');
/3/ obtaining a result by applying a cryptographic calculation to the first and second random values based on at least part of said secret key associated with said radio tag; and
/4/ transmitting said result to the identification server;

in which said cryptographic calculation is carried out using a method of executing a cryptographic calculation according to any one of the preceding claims.

**9.** Method of identifying a radio tag according to claim 8, in which a third result is obtained by applying the cryptographic operation to the second result; and
in which, in step /4/, the third result and the second random value are transmitted to the identification server.

**10.** Method of identifying a radio tag according to claim 8, in which a fourth result is obtained by applying the cryptographic operation to a second combination of the first and second random values; and
in which, in step /4/, the second result and the fourth result are transmitted to the identification server.

**11.** Method of identifying a radio tag according to any one of claims 8 to 10, in which the secret key is represented in the form of a plurality of parts respectively representing portions of a pathway from the root of the tree to the corresponding leaf, and
in which steps /1/ to /4/ are repeated for each of said parts of the secret key.

**12.** Electronic component suitable for executing a cryptographic calculation according to a given cryptographic algorithm including at least one application of a one-way function which is disabled upon an intrusion into the electronic component;
said one-way function being based on a secret key (K) which corresponds to a first affine operation ($\sigma_K$);
said electronic component comprising means suitable for implementing a method according to any one of claims 1 to 7.

**13.** Radio tag comprising an electronic component according to claim 9, said tag being suitable for implementing an identification method according to any one of claims 8 to 11.

**14.** Radio tag identification system, comprising an identification server and a tag according to claim 13.

**Patentansprüche**

**1.** Verfahren zur Durchführung einer Verschlüsselungskalkulation in einem elektronischen Bauelement gemäß einem vorbestimmten Verschlüsselungsalgorithmus, wobei das Verfahren mindestens eine Anwendung einer Einwegfunktion, die bei Eindringen in das elektronische Bauelement außer Kraft gesetzt wird, aufweist;
wobei die Einwegfunktion auf einer ersten affinen Operation ($\sigma_K$) basiert, die einem ersten geheimen Schlüssel (K) entspricht;
wobei das Verfahren die folgenden Schritte in Bezug auf die Anwendung der Einwegfunktion aufweist:

/a/ Erhalten von einem ersten und einem zweiten Zufallswert (r, r');

/b/ Erhalten eines ersten Resultates durch Anwendung einer zweiten affinen Operation ($\sigma_{K1}$), die einem zweiten geheimen Schlüssel entspricht, auf eine erste Kombination des ersten und des zweiten Zufallswertes;

/c/ Erhalten eines zweiten Resultates durch Anwendung einer dritten affinen Operation ($\sigma_{K2}$), die einem dritten geheimen Schlüssel entspricht, auf das erste Ergebnis;

**dadurch gekennzeichnet, dass** die Zusammensetzung der dritten und der zweiten affinen Operation ($\sigma_{K2} \circ \sigma_{K1}$) der ersten affinen Operation ($\sigma_K$) entspricht; und

dass eine Verschlüsselungsoperation auf das zweite Ergebnis und/oder auf eine zweite Kombination des ersten und des zweiten Zufallswertes angewandt wird.

2. Verfahren zur Durchführung einer Verschlüsselungskalkulation nach Anspruch 1, **dadurch gekennzeichnet, dass** die Verschlüsselungsoperation einer Hash-Funktion oder einer Pseudo-Zufallsfunktion entspricht.

3. Verfahren zur Durchführung einer Verschlüsselungskalkulation nach Anspruch 1 oder 2, **dadurch gekennzeichnet, dass** die Verschlüsselungsoperation auf das zweite Ergebnis angewandt wird, und dass die erste, die zweite und die dritte affine Operation Permutationen auf dem Byte-Niveau entsprechen.

4. Verfahren zur Durchführung einer Verschlüsselungskalkulation nach Anspruch 3, **dadurch gekennzeichnet, dass** die erste Kombination des ersten und des zweiten Zufallswertes der Anwendung einer Verschlüsselungsoperation entspricht, die als Eingabe den ersten und den zweiten Zufallswert nimmt.

5. Verfahren zur Durchführung einer Verschlüsselungskalkulation nach Anspruch 4, **dadurch gekennzeichnet, dass** die Verschlüsselungsoperation einer Hash-Funktion entspricht.

6. Verfahren zur Durchführung einer Verschlüsselungskalkulation nach einem beliebigen der Ansprüche 1 bis 3, **dadurch gekennzeichnet, dass** die erste Kombination des ersten und des zweiten Zufallswertes der Anwendung einer "exklusives Oder"-Operation zwischen dem ersten und dem zweiten Zufallswert entspricht.

7. Verfahren zur Durchführung einer Verschlüsselungskalkulation nach Anspruch 1, **dadurch gekennzeichnet, dass** die Verschlüsselungsoperation auf eine zweite Kombination des ersten und des zweiten Zufallswertes angewandt wird;

dass die erste, die zweite und die dritte affine Operation ($\sigma_K$, $\sigma_{K1}$, $\sigma_{K2}$) "exklusives Oder"-Operationen mit jeweils dem ersten, dem zweiten und dem dritten geheimen Schlüssel entsprechen; und

dass der erste geheime Schlüssel (K) gleich dem Ergebnis einer "exklusives Oder"-Operation zwischen dem zweiten und dem dritten geheimen Schlüssel ($K_1$, $K_2$) ist.

8. Verfahren zur Identifizierung eines Radiofrequenz-Identifikationsetiketts in der Nähe eines Identifizierungsservers, wobei der Identifizierungsserver eine Vielzahl von geheimen Schlüsseln gemäß eines Q-ären Baumes, der eine Wurzel und eine Vielzahl von Blättern aufweist, verwaltet, wobei Q eine ganze Zahl größer oder gleich 2 ist und wobei jedes Blatt des Baumes einem geheimen Schlüssel entspricht;

wobei ein geheimer Schlüssel der Vielzahl von geheimen Schlüsseln dem Radiofrequenz-Identifikationsetikett zugeordnet ist;

wobei das Verfahren zur Identifizierung auf dem Niveau des Radiofrequenz-Identifikationsetiketts die folgenden Schritte aufweist:

/1/ Empfangen eines ersten Zufallswertes (r) vom Identifikationsserver;

/2/ Erzeugen eines zweiten Zufallswertes (r');

/3/ Erhalten eines Ergebnisses durch Anwendung einer Verschlüsselungskalkulation auf den ersten und den zweiten Zufallswert auf Grundlage mindestens eines Teils des geheimen Schlüssels, der dem Radiofrequenz-Identifikationsetikett zugeordnet ist; und

/4/ Übermitteln des Ergebnisses an den Identifizierungsserver;

**dadurch gekennzeichnet, dass** die Verschlüsselungskalkulation gemäß eines Verfahrens zur Durchführung einer Verschlüsselungskalkulation nach einem beliebigen der vorherigen Ansprüche durchgeführt wird.

9. Verfahren zur Identifizierung eines Radiofrequenz-Identifikationsetiketts nach Anspruch 8, **dadurch gekennzeichnet, dass** ein drittes Ergebnis durch Anwendung der Verschlüsselungsoperation auf das zweite Ergebnis erhalten wird; und

dass das dritte Ergebnis und der zweite Zufallswert im Schritt /4/ an den Identifizierungsserver übermittelt werden.

10. Verfahren zur Identifizierung eines Radiofrequenz-Identifikationsetiketts nach Anspruch 8, **dadurch gekennzeichnet, dass** ein viertes Ergebnis durch Anwendung der Verschlüsselungsoperation auf eine zweite Kombination des ersten und des zweiten Zufallswertes erhalten wird; und
dass das zweite Ergebnis und das vierte Ergebnis im Schritt /4/ an den Identifizierungsserver übermittelt werden.

11. Verfahren zur Identifizierung eines Radiofrequenz-Identifikationsetiketts nach einem beliebigen der Ansprüche 8 bis 10, **dadurch gekennzeichnet, dass** der geheime Schlüssel in Form vom mehreren Teilen dargestellt wird, die jeweils Abschnitte eines Weges von der Wurzel des Baumes bis zum entsprechenden Blatt darstellen, und
dass die Schritte /1/ bis /4/ für jeden der Teile des geheimen Schlüssels wiederholt werden.

12. Elektronisches Bauelement, das geeignet ist, um eine Verschlüsselungskalkulation gemäß einem vorbestimmten Verschlüsselungsalgorithmus durchzuführen, der mindestens eine Anwendung einer Einwegfunktion, die bei Eindringen in das elektronische Bauelement außer Kraft gesetzt wird, aufweist;
wobei die Einwegfunktion auf einem geheimen Schlüssel (K) basiert, der einer ersten affinen Operation ($\sigma_K$) entspricht;
wobei das elektronische Bauelement Mittel aufweist, die so angeordnet sind, um ein Verfahren nach einem beliebigen der Ansprüche 1 bis 7 durchzuführen.

13. Radiofrequenz-Identifikationsetikett, das ein elektronisches Bauelement nach Anspruch 9 aufweist, wobei das Radiofrequenz-Identifikationsetikett geeignet ist, um ein Verfahren zur Identifizierung nach einem beliebigen der Ansprüche 8 bis 11 durchzuführen.

14. System zur Identifizierung eines Radiofrequenz-Identifikationsetiketts, das einen Identifizierungsserver und ein Radiofrequenz-Identifikationsetikett nach Anspruch 13 aufweist.

FIG.1.

FIG.2.

# FIG.3.

$$h_2(\sigma_{k_0^0}(h_1(COMB_1(r,r')))$$

$$h_2(\sigma_{k_0^1}(h_1(COMB_1(r,r')))$$

$$h_2(\sigma_{k_1^2}(h_1(COMB_1(r,r')))$$

# FIG.4.

31

32

r

33

41 — CALCUL

$h'(COMB_2(r,r'))$

42

$\sigma_{k_0^0}(COMB_3(r,r'))$

43

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007046018 A

**Littérature non-brevet citée dans la description**

- **BLAISE GASSEND.** Physical Random Functions. *Masters Thesis,* Février 2003